# EUROPÄISCHE PATENTSCHRIFT

(11) **EP 3 052 833 B1**
(45) Veröffentlichungstag und Bekanntmachung des Hinweises auf die Patenterteilung: **10.04.2019**
(21) Anmeldenummer: 14771914.0
(22) Anmeldetag: 24.09.2014
(51) Int. Cl.: B60G 17/08, B60G 99/00, B60N 2/02, B62D 33/06, B62D 33/063, B60N 2/16, B60N 2/50, F16F 15/03

(54) **FAHRZEUGSITZ ODER FAHRZEUGKABINE MIT EINER FEDERUNGSEINRICHTUNG UND NUTZKRAFTFAHRZEUG**
VEHICLE SEAT OR VEHICLE CAB WITH A SUSPENSION SYSTEM, AND UTILITY VEHICLE
SIÈGE DE VÉHICULE OU CABINE DE VÉHICULE DOTÉ(E) D'UN DISPOSITIF DE SUSPENSION ET VÉHICULE UTILITAIRE

(30) Priorität: 01.10.2013 DE 102013110927
(43) Veröffentlichungstag der Anmeldung: 10.08.2016
(73) Patentinhaber: GRAMMER AG, 92224 Amberg (DE)
(72) Erfinder: HALLER, Erwin, 92262 Birgland (DE)
(74) Vertreter: Hannke, Christian
(86) Internationale Anmeldenummer: PCT/EP2014/070313
(87) Internationale Veröffentlichungsnummer: WO 2015/049134

(56) Entgegenhaltungen:
- EP-A1- 2 390 133
- EP-A2- 1 702 791
- WO-A1-2010/136049
- JP-A- 2003 139 192
- US-A- 5 975 508
- US-A1- 2007 278 025

## Beschreibung

Die Erfindung betrifft einen Fahrzeugsitz oder eine Fahrzeugkabine mit einer Federungseinrichtung umfassend ein oberes Abschlussteil und ein gegenüber dem oberen Abschlussteil auslenkbares unteres Abschlussteil, welche mittels eines Federungselements federnd miteinander wirkverbunden sind, und mit einer Dämpfungseinrichtung zum Dämpfen von auf wenigstens einem der beiden Abschlussteile wirkenden Schwingungen.

Des Weiteren betrifft die Erfindung ein Nutzkraftfahrzeug mit einem Fahrzeugsitz und mit einer Fahrzeugkabine.

Gattungsgemäße Fahrzeugsitze oder Fahrzeugkabinen sind aus dem Stand der Technik gut bekannt, mittels welchen sich der Fahrkomfort insbesondere an Nutzkraftfahrzeugen erheblich verbessern lässt. Die EP2390133A1 offenbart einen Fahrzeugsitz mit einer Federungseinrichtung umfassend ein oberes Abschlussteil und ein gegenüber dem oberen Abschlussteil auslenkbares unteres Abschlussteil, welche mittels eines Federungselements federnd miteinander wirkverbunden sind, und mit einer Dämpfungseinrichtung zum Dämpfen von auf wenigstens einem der beiden Abschlussteile wirkenden Schwingungen, wobei eine elektromagnetisch wirkende Dämpfungs- und Höhennivelliereinheit, welche derart zwischen den beiden Abschlussteilen angeordnet ist, dass sie auf das obere der beiden Abschlussteile in Fahrzeughöhenrichtung sowohl schwingungsisolierend als auch höhennivellierend wirkt.

Es ist Aufgabe vorliegender Erfindung, gattungsgemäße Fahrzeugsitze bzw. Fahrzeugkabinen bei verbessertem Fahrkomfort konstruktiv einfacher gegenüber einer Fahrzeugkarosserie zu lagern.

Die Aufgabe der Erfindung wird von einem Fahrzeugsitz oder einer Fahrzeugkabine mit den im Anspruch 1 angegebenen Merkmalen gelöst.

Die Erfindung baut auf dem gattungsgemäßen Stand der Technik dadurch auf, dass eine elektromagnetisch wirkende Dämpfungs- und Höhennivelliereinheit vorgesehen ist, welche derart zwischen den beiden Abschlussteilen angeordnet ist, dass sie auf das obere der beiden Abschlussteile in Fahrzeughöhenrichtung sowohl schwingungsisolierend als auch höhenregulierend wirkt.

Durch diese elektromagnetisch wirkende Dämpfungs- und Höhennivelliereinheit kann eine Dämpfungseinrichtung für ein Federungssystem mitsamt einer Höhennivellierung und damit der gesamte Unterbau des Fahrzeugsitzes bzw. der Fahrzeugkabine außerordentlich einfach konstruktiv umgesetzt werden, um eine entsprechende Schwingungsisolierung und/oder Höheneinstellung ausschließlich oder unterstützend zu bewirken.

Insbesondere kann mittels der elektromagnetisch wirkenden Dämpfungs- und Höhennivelliereinheit aktiv in eine Schwingungsisolation eingegriffen werden. Das heißt, dass beispielsweise eine durch herkömmliche Dämpfungselemente, wie etwa hydraulische Stoßdämpfer oder dergleichen, erzeugte Dämpfung der vorliegenden Dämpfungseinrichtung kumulativ oder alternativ aktiv moduliert werden kann.

Des Weiteren können in Fahrzeughöhenrichtung wirkende Verstellkräfte konstruktiv einfach erzeugt werden, wie nachstehend noch beispielhaft ausführlicher erläutert ist.

Zudem kann durch diese elektromagnetisch wirkende Dämpfungs- und Höhennivelliereinheit über den gesamten zur Verfügung stehenden Federungsweg eine linear ansteigende Kraftkennlinie bzw. Federkennlinie erzeugt werden.

Die vorstehend genannten Verbesserungen können vorteilhafterweise erzielt werden, da mittels der elektromagnetisch wirkenden Dämpfungs- und Höhennivelliereinheit ein in Fahrzeughöhenrichtung wirkendes Drehmoment erzeugt werden kann.

Die Aufgabe der Erfindung wird darüber hinaus von einem Nutzkraftfahrzeug mit den im Anspruch 11 angegebenen Merkmalen gelöst.

Speziell im Zusammenhang mit Nutzkraftfahrzeugen sind der erfindungsgemäße Fahrzeugsitz bzw. die erfindungsgemäße Fahrzeugkabine vorteilhaft anwendbar, da der Fahrzeugführer aufgrund des wesentlich verbesserten Fahrkomforts vor vorzeitiger Ermüdung besser geschützt ist. Darüber hinaus besteht auch bezüglich der Nutzkraftfahrzeuge ein großes Interesse an konstruktiv einfachen und damit weniger störungsanfälligen Lösungen für entsprechende Federungssysteme. Dies gilt insbesondere auch hinsichtlich landwirtschaftlich genutzten Nutzkraftfahrzeugen.

Die Federungseinrichtung kann ein oder mehrere Federungselemente umfassen, welche beispielsweise als mechanisches Federungselement und/oder als pneumatisches Federungselement ausgestaltet sein können.

Das obere Abschlussteil der Federungseinrichtung kann beispielsweise an der Unterseite eines Sitzteils des Fahrzeugsitzes oder an der Unterseite der Fahrzeugkabine befestigt sein, oder von dieser jeweiligen Unterseite unmittelbar ausgebildet sein.

Insofern kann das untere Abschlussteil der Federungseinrichtung beispielsweise an einem Bauteil einer Fahrzeugkarosserie festgelegt oder direkt durch diese realisiert sein.

Jedenfalls ist das obere Abschlussteil gegenüber dem unteren Abschlussteil an einem Unterbau des Fahrzeugsitzes bzw. der Fahrzeugkabine derart gelagert, dass ersteres in Vertikalauslenkrichtung, also in Fahrzeughöhenrichtung eines Fahrzeuges, insbesondere eines Nutzkraftfahrzeuges, gegenüber dem unteren Abschlussteil ausgelenkt werden kann, wenn insbesondere eine äußere Schwingungsanregung auf den Fahrzeugsitz bzw. auf die Fahrzeugkabine einwirkt.

Insofern handelt es sich bei dem oberen Abschlussteil um ein im Wesentliches vertikal schwingendes Bauteil der Federungseinrichtung, dessen Hauptschwingungsrichtung in Richtung der Fahrzeughöhenrichtung gerichtet ist, also vertikal.

Hierzu ist die Federungseinrichtung insbesondere mit einem Vertikalfederungselement ausgestattet, welches in Fahrzeughöhenrichtung federnd wirken kann.

Eine Auslenkungsmechanik des oberen Abschlussteils gegenüber dem unteren Abschlussteil kann baulich sehr einfach durch ein Scherengestell erreicht werden.

Insofern ist es vorteilhaft, wenn das obere Abschlussteil und das untere Abschlussteil mittels eines Scherengestells miteinander verbunden sind. Hierdurch ist das obere Abschlussteil in Vertikalrichtung definiert geführt.

Weisen darüber hinaus die Dämpfungseinrichtung und eine Höhennivellierungseinrichtung zum Einstellen eines Abstandes zwischen dem oberen Abschlussteil und dem unteren Abschlussteil in Fahrzeughöhenrichtung gemeinsam die elektromagnetisch wirkende Dämpfungs- und Höhennivelliereinheit auf, mittels welcher ein in Fahrzeughöhenrichtung wirkendes Drehmoment erzeugbar ist, kann eine weitere konstruktive Vereinfachung erzielt werden.

Vorteilhafterweise können die Dämpfungseinrichtung und die Höhennivellierungseinrichtung zumindest mittels eines gemeinsamen und idealerweise einzigen elektromagnetisch arbeitenden Stellgliedelements konstruktiv realisiert sein, so dass deren bauliche Umsetzung extrem bauteilreduziert vorgenommen werden kann.

Es versteht sich, dass die elektromagnetisch wirkende Dämpfungs- und Höhennivelliereinheit konstruktiv vielfältig ausgeführt sein kann, so dass selbstverständlich unterschiedliche Konstruktionen herangezogen werden können, um die elektromagnetisch wirkende Dämpfungs- und Höhennivelliereinheit zu verwirklichen.

Beispielsweise umfasst die elektromagnetisch wirkende Dämpfungs- und Höhennivelliereinheit hierzu eine Polreibungskupplung.

Zum Beispiel kann die elektromagnetisch wirkende Dämpfungs- und Höhennivelliereinheit besonders einfach und kostengünstig bereitgestellt werden, wenn die elektromagnetisch wirkende Dämpfungs- und Höhennivelliereinheit eine Wirbelstrombremse aufweist.

Eine bevorzugte Ausführungsvariante sieht vor, dass ein Rotor der elektromagnetisch wirkenden Dämpfungs- und Höhennivelliereinheit ein Drehachsenelement zweier drehbeweglich miteinander verbundener Scherenarmteile eines die beiden Abschlussteile miteinander koppelnden Scherengestells umfasst.

Durch einen derartig bauenden und in das Scherengestell integrierten Rotor gelingt konstruktiv einfach sowohl eine Schwingungsisolierung als auch eine Höhennivellierung an einem Fahrzeugsitz bzw. an einer Fahrzeugkabine.

Das vorliegende Scherengestell zeichnet sich durch zwei seitliche Scherenarmteilpaare aus. Jedes der beiden Scherenarmteilpaare wiederum setzt sich aus zwei Scherenarmeteile zusammen, welche beispielsweise mittig ihrer Längserstreckung in einem Drehgelenk drehbeweglich miteinander verbunden sind. In der Regel ist ein solches Drehgelenk durch einen Lagerbolzen realisiert, welcher in entsprechenden Lageraugen der beiden Scherenarmteile gelagert ist.

Vorteilhafterweise ist ein solcher herkömmlicher Lagerbolzen durch den Rotor der vorliegenden elektromagnetisch wirkenden Dämpfungs- und Höhennivelliereinheit ersetzt, so dass der Rotor ein diesbezügliches Drehachsenelement ausgestaltet oder antreibt.

Erfindungsgemäß sind eine Antriebseinheit eines Rotors der elektromagnetisch wirkenden Dämpfungs- und Höhennivelliereinheit an einem ersten Scherenarmteil eines die beiden Abschlussteile miteinander koppelnden Scherengestells und ein Stator der elektromagnetisch wirkenden Dämpfungs- und Höhennivelliereinheit an einem zweiten Scherenarmteil des Scherengestells angeordnet.

Mittels dieser Konstruktion können die durch die elektromagnetisch wirkende Dämpfungs- und Höhennivelliereinheit erzeugten Drehmomente eine translatorisch Verlagerung des oberen Abschlussteils erzielt werden.

Insofern bewirken die erzeugten Drehmomente speziell auf das obere Abschlussteil wirkende Vertikalkräfte, welche insbesondere in Fahrzeughöhenrichtung gerichtet sind.

Kumulativ kann mittels dieser erzeugten Drehmomente eine Schwingungsisolierung erzielt werden.

Das wiederum bedeutet, dass die Dämpfungseinrichtung und die Höhennivellierungseinrichtung ein gemeinsames elektromagnetisch arbeitendes Stellgliedelement umfassen, mittels welchem einerseits die Schwingungsisolierung erzielt werden kann. Andererseits gelingt es mittels dieses gemeinsamen elektromagnetisch arbeitenden Stellgliedelements, die Höhennivellierung vorzunehmen.

Im Sinne der Erfindung stellt der vorliegende Rotor die Antriebsseite und der entsprechende Stator die Magnetseite der elektromagnetisch wirkenden Dämpfungs- und Höhennivelliereinheit dar.

Die Antriebseinheit kann baulich einfach mit einem elektrisch regelbaren Elektromotor ausgerüstet sein, welcher den Rotor antreibt.

Baulich einfach kann der Rotor auf einer Antriebswelle des Elektromotors oder dergleichen aufgeschrumpft sein. Es können aber auch andere kraft-, form- oder stoffschlüssige Verbindungen eingesetzt werden.

Eine besonders gute Wechselwirkung zwischen dem Rotor und dem Stator kann erzielt werden, wenn der Rotor einen radial in Bezug auf die Drehachse des Drehachsenelements auskragenden Kragenbereich aufweist, der mit dem Stator wechselwirkt. Vorteilhafterweise besteht der Kragenbereich zumindest teilweise aus Kupfer oder einem scheibenförmigen Kupferelement, wodurch die Wechselwirkfähigkeit des Rotors mit dem Stator weiter verbessert werden kann.

Erfindungsgemäß umfasst der Stator ein elektrisch regelbares Elektromagnetelement oder ein Permanentmagnetelement.

Somit kann eine für eine Schwingungsbeeinflussung erforderliche hochfrequente Regelung der elektromagnetisch wirkenden Dämpfungs- und Höhennivelliereinheit im Falle des elektrisch regelbaren Elektromagnetelements mithilfe einer Veränderung der Strom-/Spannungswerte an dem elektrisch regelbaren Elektromagnetelement erfolgen.

Alternativ kann eine solche Schwingungsbeeinflussung im Falle des Permanentmagneten auch durch eine axiale Verlagerung des Rotors entlang der Drehachse des Drehachsenelements erzielt werden. Das heißt, der Abstand zwischen dem Rotor und dem Stator wird vergrößert oder verkleinert.

Insofern ist es vorteilhaft, wenn der Rotor gegenüber einem Stator axial entlang der Drehachse des Drehachsenelements verlagerbar gehaltert ist.

Die Art und Intensität der Regelung der elektromagnetisch wirkenden Dämpfungs- und Höhennivelliereinheit kann bei allen Ausführungsvarianten mittels eines Regelalgorithmus einer entsprechenden Steuer- und/oder Regeleinrichtung beeinflusst werden.

Insofern sieht eine weitere vorteilhafte Ausführungsvariante eine Steuer- und/oder Regeleinrichtung zum Einstellen der elektromagnetisch wirkenden Dämpfungs- und Höhennivelliereinheit in Abhängigkeit von einer auf das obere Abschlussteil wirkenden Auflast vor.

Die elektromagnetisch wirkende Dämpfungs- und Höhennivelliereinheit kann besonders effizient wirken, wenn die Steuer- und/oder Regeleinrichtung einen auf Seite des unteren Abschlussteils angeordneten Beschleunigungsmesssensors zum Ermitteln von auf das untere Abschlussteil wirkende Beschleunigungen umfasst.

Eine exaktere Steuerung bzw. Regelung der elektromagnetisch wirkenden Dämpfungs- und Höhennivelliereinheit kann erzielt werden, wenn die Steuer- und/oder Regeleinrichtung einen Wegmesssensor zum Erfassen eines Abstands und/oder einer Abstandsabweichung zwischen dem oberen und der unteren Abschlussteil umfasst.

Darüber hinaus ist es vorteilhaft, wenn die elektromagnetisch wirkende Dämpfungs- und Höhennivelliereinheit ein Spannungsversorgungselement von 12 V oder 24 V umfasst, oder zumindest einen elektrischen Anschluss für eine entsprechende Spannungsversorgung.

Mittels der vorliegenden Erfindung ist ein aktiv geregeltes Federungssystem geschaffen, welches zusätzlich über das elektromagnetisch wirkende Stellgliedelement verfügt, mittels welchem zum einen eine temporäre Nivellierung eines eingestellten Höhenniveaus, insbesondere einer eingestellten Fahrzeugsitzhöhe, erzielt werden kann. Zum anderen kann es aktiv in die Schwingungsisolierung eingreifen. Insofern ist hierdurch baulich besonders einfach die elektromagnetisch wirkende Dämpfungs- und Höhennivelliereinheit geschaffen.

Hierbei kann ein herkömmliches Luftfederungselement oder dergleichen als Basisfederung dienen, während das elektromagnetisch wirkende Stellgliedelement als zusätzliches Aktiv-Bauteil oder als zusätzliche Aktiv-Bauteilgruppe, insbesondere in Gestalt einer Wirbelstrombremse, zusätzlich in Vertikalfederungsrichtung wirken kann. Hierzu ist das elektromagnetisch wirkende Stellgliedelement derart in die Federungseinrichtung integriert, wie vorstehend bereits beschrieben, dass ein durch das elektromagnetisch wirkende Stellgliedelement erzeugte Drehmoment eine vertikalwirkende Stützkraft bewirkt.

Weitere Vorteile der vorliegenden Erfindung sind darin zu sehen, dass vorliegend eine kontaktlose, kraftschlüssige und über eine Polreibung von Magneten erzeugte Wechselwirkung von beweglichen Bauteilen erzielt werden kann. Ebenso kann ein nahezu verschleißfreier Betrieb gewährleistet werden.

Die Kraftkomponente, welche vorliegend zuerst als Drehmoment vorliegt, wird zum einen über die Drehzahl des Elektromotors erzeugt. Zum anderen wird diese in Millisekunden über eine Spaltänderung bezüglich der Variante mit Permanentmagnetelement oder über eine Strom-Spannungsregelung bezüglich der Variante mit Elektromagnetelement verändert.

Die Drehzahl des Elektromotors bzw. der Antriebseinheit des Rotors erzeugt hierbei die Basiskraft zur Niveauregulierung, wobei die Spaltänderung zwischen dem Rotor und dem Stator bzw. der Strom-Spannungswert als vorderster Regelparameter zur Beeinflussung der Schwingungsisolation dient.

Weitere Vorteile, Ziele und Eigenschaften vorliegender Erfindung werden anhand anliegender Zeichnung und nachfolgender Beschreibung erläutert, in welchen beispielhaft ein Nutzkraftfahrzeugsitz mit alternativ ausgebildeten elektromagnetisch wirkenden Dämpfungs- und Höhennivelliereinheiten dargestellt und beschrieben ist. In der Zeichnung zeigen:
- Figur 1: schematisch eine Vorderansicht eines Fahrzeugsitzunterbaus umfassend eine elektromagnetisch wirkende Dämpfungs- und Höhennivelliereinheit, welche derart zwischen zwei Abschlussteilen einer Federungseinrichtung angeordnet ist, dass sie auf eine der beiden Abschlussteile in Fahrzeughöhenrichtung sowohl schwingungsisolierend als auch höhennivellierend wirkt;
- Figur 2: schematisch eine Ansicht eines Diagramms mit unterschiedlichen Federkennlinien der Federungseinrichtung aus der Figur 1;
- Figur 3: schematisch eine teilweise geschnittene Ansicht der Federungseinrichtung aus der Figur 1 mit einer elektromagnetisch wirkenden Dämpfungs- und Höhennivelliereinheit umfassend ein elektrisch regelbares Elektromagnetelement;
- Figur 4: schematisch eine Detailansicht der elektromagnetisch wirkenden Dämpfungs- und Höhennivelliereinheit aus der Figur 3;
- Figur 5: schematisch eine teilweise geschnittene Ansicht der Federungseinrichtung aus der Figur 1 mit einer alternativen elektromagnetisch wirkenden Dämpfungs- und Höhennivelliereinheit umfassend ein Permanentmagnetelement; und
- Figur 6: schematisch eine Detailansicht der elektromagnetisch wirkenden Dämpfungs- und Höhennivelliereinheit aus der Figur 5.

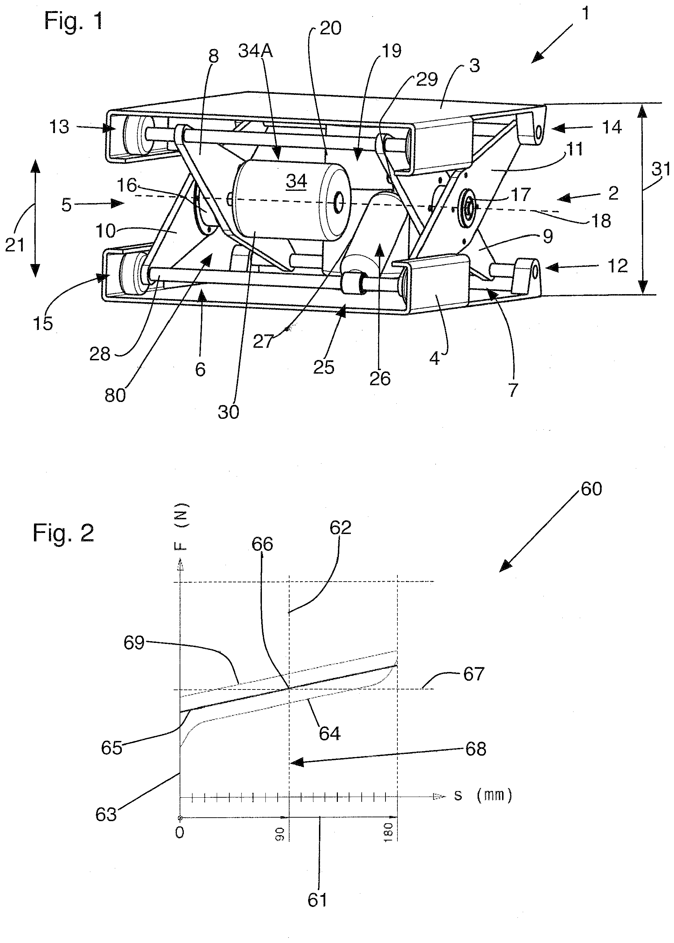

Der insbesondere in der Figur 1 gezeigte Fahrzeugsitzunterbau 1 eines Fahrzeugsitzes (nicht weiter gezeigt) weist eine Federungseinrichtung 2 auf, welche sich durch ein oberes Abschlussteil 3 und ein unteres Abschlussteil 4 auszeichnet, die in diesem Ausführungsbeispiel beide durch ein Scherengestell 5 miteinander höhenverstellbar gekoppelt sind.

Das Scherengestell 5 besteht im Wesentlichen aus zwei Scherenarmpaare 6 und 7, die wiederum jeweils einen ersten Scherenarm 8 bzw. 9 und einen zweiten Scherenarm 10 und 11 umfassen.

Die ersten Scherenarme 8 bzw. 9 sind einerseits an dem unteren Abschlussteil 4 mittels einer gemeinsamen unteren Festlagereinrichtung 12 drehbeweglich gelagert. Andererseits sind sie an dem oberen Abschlussteil 3 mittels einer gemeinsamen oberen Loslagereinrichtung 13 linearbeweglich gelagert.

Ähnlich verhält es sich bezüglich der zweiten Scherenarme 10 und 11, welche mittels einer gemeinsamen oberen Festlagereinrichtung 14 drehbeweglich an dem oberen Abschlussteil 3 und mittels einer gemeinsamen unteren Loslagereinrichtung 15 linearbeweglich an dem unteren Abschlussteil 4 gelagert sind.

Die ersten und zweiten Scherenarme 8 und 10 bzw. 9 und 11 des jeweiligen Scherenarmpaars 6 bzw. 7 sind mittels eines Drehgelenks 16 bzw. 17 drehbar um eine Drehachse 18 drehbeweglich miteinander verbunden.

Darüber hinaus umfasst die Federungseinrichtung 2 noch ein Federungselement 18, mittels welchem die beiden Abschlussteile 3 und 4 federnd miteinander verbunden sind. Das Federungselement 19 ist durch ein Luftfederelement 20 bereitgestellt.

Im Einbauzustand sind das obere Abschlussteil 3 sitzteilseitig und das untere Abschlussteil 4 karosserieseitig in dem Fahrzeugsitz derart integriert, dass das obere Abschlussteil 3 gegenüber dem unteren Abschlussteil 4 in Fahrzeughöhenrichtung 21 aus- bzw. einfedern kann, wenn eine entsprechende äußere Anregung auf den Fahrzeugsitz bzw. auf das Fahrzeug wirkt.

Um die Schwingungen des oberen Abschlussteils 3 zumindest teilweise isolieren zu können, umfasst der Fahrzeugsitzunterbau 1 noch eine Dämpfungseinrichtung 25 mit einem hydraulischen Stoßdämpferelement 26. Das hydraulische Stoßdämpferelement 26 ist mit seinem Zylinderteil 27 an einer Querstange 28 der gemeinsamen unteren Loslagereinrichtung 15 und mit einem Kolbenteil 29 an dem ersten Scherenarm 9 des zweiten Scherenarmpaars 7 befestigt.

Um zusätzlich noch eine aktive Schwingungsisolierung und darüber hinaus noch eine Höhennivellierung des oberen Abschlussteils 3 gegenüber dem unteren Abschlussteil 4 zu erzielen, umfasst die Dämpfungseinrichtung 25 noch eine elektromagnetisch wirkende Dämpfungs- und Höhennivelliereinheit 30, welche derart zwischen den beiden Abschlussteilen 3, 4 angeordnet ist, dass sie auf das obere Abschlussteil 3 in Fahrzeughöhenrichtung 21 sowohl schwingungsisolierend als auch höhennivellierend wirkt.

Insofern kann die elektromagnetisch wirkende Dämpfungs- und Höhennivelliereinheit 30 nicht nur als eine weitere Funktionsbauteilgruppe der Dämpfungseinrichtung 25 angesehen werden, sondern sie verkörpert zugleich auch eine Höhennivellierungseinrichtung zum Einstellen eines Abstandes 31 zwischen dem oberen Abschlussteil 3 und dem unteren Abschlussteil 4 in Fahrzeughöhenrichtung 21.

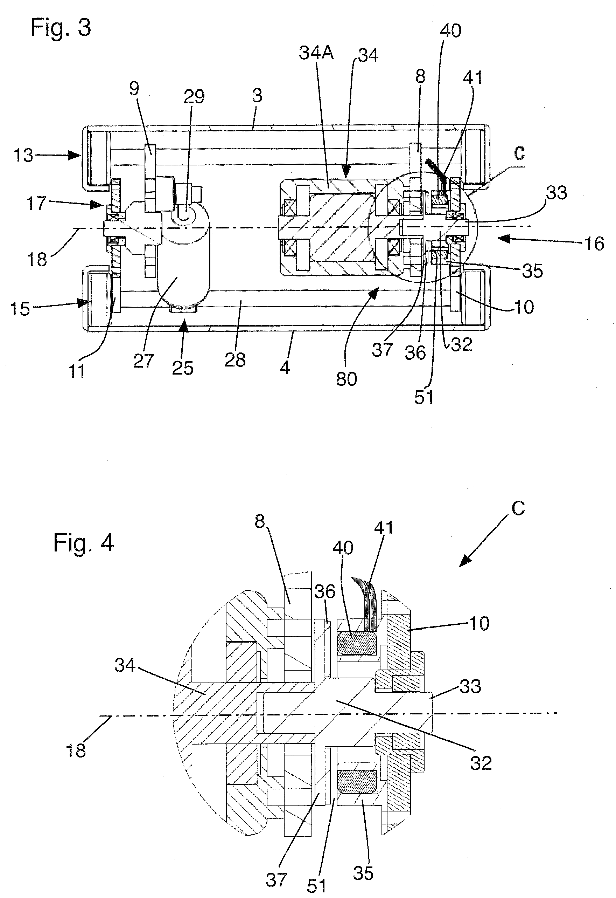

Wie nach den Darstellungen gemäß der Figuren 3 bis 6 gut ersichtlich ist, ist die elektromagnetisch wirkende Dämpfungs- und Höhennivelliereinheit 30 baulich besonders einfach in das Federungssystem mit der Federungseinrichtung 2 integriert, da sie teilweise ein integraler Bestandteil des ersten Drehgelenks 16 ist, indem ein Rotor 32 der elektromagnetisch wirkenden Dämpfungs- und Höhennivelliereinheit 30 ein Drehachsenelement 33 des ersten Drehgelenks 16 ausgestaltet, mittels welchen die beiden Scherenarme 8 und 10 drehbeweglich miteinander verbunden sind.

Der Rotor 32 ist hierbei mittels eines elektrisch regelbaren Elektromotors 34 angetrieben, wobei der elektrisch regelbare Elektromotor 34 mit seinem Gehäuse 34A an dem ersten Scherenarm 8 des ersten Scherenarmpaars 6 angeflanscht ist.

Darüber hinaus weist die elektromagnetisch wirkende Dämpfungs- und Höhennivelliereinheit 30 noch einen Stator 35 auf, der an dem zweiten Scherenarm 10 des ersten Scherenarmpaars 6 drehfest befestigt ist.

Damit der Rotor 32 und der Stator 35 besser miteinander wechselwirken können, umfasst der Rotor 32 noch einen mit einem Kupferring 36 ausgestatteten Kragenbereich 37, der sich radial von dem Drehachsenelement 33 nach außen erstreckt.

Gemäß dem in den Figuren 3 und 4 gezeigten Ausführungsbeispiel ist der Stator 35 mit einem Elektromagneten 40 ausgestattet, welcher über einen elektrischen Anschluss 41 hinsichtlich der Stromstärke und der Spannung regelbar ist. Insofern kann die erzielbare elektromagnetische Wirkung der elektromagnetisch wirkenden Dämpfungs- und Höhennivelliereinheit 30 einerseits durch die Drehzahl des Rotors 32 und andererseits durch die Stromstärke bzw. Spannung an dem Elektromagneten 40 moduliert werden.

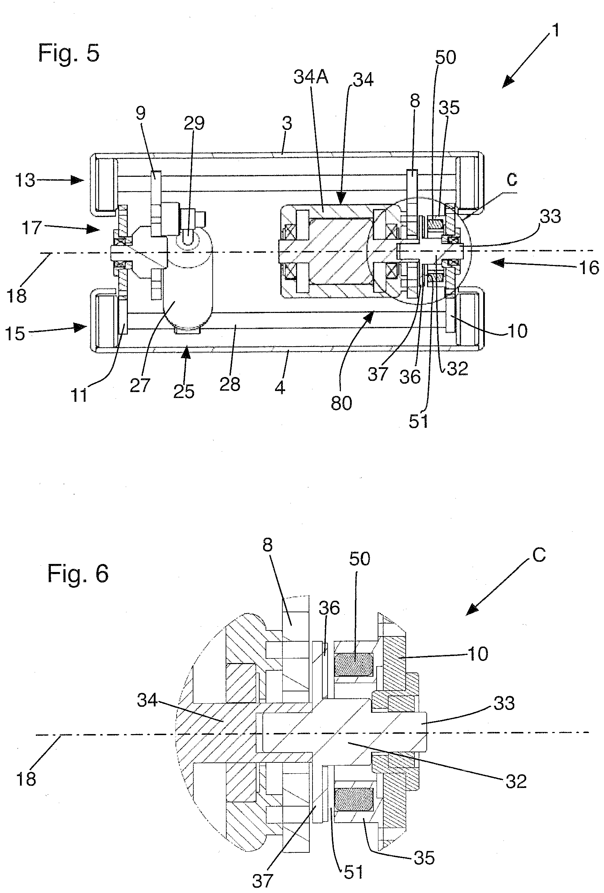

Gemäß dem in den Figuren 5 und 6 gezeigten alternativen Ausführungsbeispiel ist der Stator 35 mit einem Permanentmagneten 50 ausgestattet. Die erzielbare elektromagnetische Wirkung der mit dem Permanentmagneten 50 ausgestatteten elektromagnetisch wirkenden Dämpfungs- und Höhennivelliereinheit 30 wird einerseits ebenfalls durch die Drehzahl des Rotors 32 beeinflusst. Andererseits wird sie jedoch auch durch eine axiale Relativbewegung zwischen dem Rotor 32 und dem Stator 35 beeinflusst, indem der Rotor 32 entlang der Drehachse 18 axial verschoben wird. Hierdurch kann der Spalt 51 zwischen dem Rotor 32 und dem Stator 35 verändert werden, wodurch die Wechselwirkung zwischen Rotor 32 und Stator 35 verändert werden kann.

Jedenfalls kann mit der in den Ausführungsbeispielen jeweils beschriebenen elektromagnetisch wirkenden Dämpfungs- und Höhennivelliereinheit 30 auf das Scherengestell 5 wirkende Drehmomente erzeugt werden, mittels welchen einerseits eine Schwingungsisolierung in Fahrzeughöhenrichtung 21 bezüglich des oberen Abschlussteils 3 erzielt werden kann. Andererseits kann der Abstand zwischen den beiden Abschlussteilen 3 und 4 in Fahrzeughöhenrichtung 21 individuell eingestellt und an unterschiedliche Auflasten oder dergleichen angepasst werden.

Vorteilhaft ist auch, dass über den gesamten zur Verfügung stehenden Federungsweg eine linear ansteigende Kraftkennlinie bereitgestellt werden kann, wie auch gemäß dem in der Figur 2 gezeigten Diagramm 60 visualisiert ist.

Bei dem Diagramm 60 ist an der Abszisse 61 der vorhandene Federungsweg s in Millimeter abgetragen, wobei ein angestrebtes mittleres vertikales Höhenniveau 62 bei 90 mm angestrebt ist, so dass das obere Abschlussteil 3 im Idealfall sowohl einen vertikal nach unten zur Verfügung stehenden negativen Federungsweg als auch einen vertikal nach oben zur Verfügung stehenden positiven Federungsweg von jeweils 90 mm durchlaufen kann.

An der Ordinate 63 des Diagramms 60 ist die einer Auflast auf das obere Abschlussteil 3 entgegenwirkende Kraft F in Newton abgetragen.

Die untere in diesem Diagramm 60 eingetragene Federkennlinie 64 ist die des Luftfederelements 20, welche am Beginn des Federungswegs s einen logarithmischen Verlauf und am Ende des Federungswegs s einen exponentiellen Verlauf aufweist; dazwischen steigt die untere Federkennlinie 64 des Luftfederelements 20 linear an.

Die unmittelbar oberhalb der unteren Federkennlinie 64 verlaufende Kennlinie 65 beinhaltet die Wirkung der Aktivierung der elektromagnetisch wirkenden Dämpfungs- und Höhennivelliereinheit 30, wobei diese Kraftkennlinie 65 zum einen durch den Schnittpunkt 66 der durch die Auflast von 1000 N erzeugten Linie 67 und der durch das vertikale Höhenniveau 62 erzeugten Linie 68 und zum anderen vollständig über den gesamten Federungsweg s linear verläuft.

Die Kraftkennlinie 65 zeigt die Soll-Werte der durch die elektromagnetisch wirkenden Dämpfungs- und Höhennivelliereinheit 30 erzeugten Kräfte in Fahrzeughöhenrichtung 21.

Die obere Kraftkennlinie 69 beschreibt die durch die elektromagnetisch wirkenden Dämpfungs- und Höhennivelliereinheit 30 erzeugten Kräfte in Fahrzeughöhenrichtung 21, welche oberhalb der Soll-Werte liegen.

Durch das Diagramm 60 ist gut zu erkennen, dass insbesondere das Luftfederelement 20 als Basis für die Aufnahme einer Grundlast dient, welche als Masse auf die Federung wirkt. Vorliegend wird die Federungseinrichtung 2 hinsichtlich einer Auflast abzüglich der Hälfte der maximal möglichen Federkraft vorgespannt. Die maximal mögliche Federkraft ist insbesondere durch die Dimension der elektromagnetisch wirkenden Dämpfungs- und Höhennivelliereinheit 30 definiert, welche im gezeigten Diagramm 60 200 N in Fahrzeughöhenrichtung 21 beträgt. Somit wird die Federung bei einer beispielhaft angenommenen Auflast von 1000 N mit einer Vorspannkraft von 900 N über das Luftfederungselement 20 getragen. Die angestrebte Sitzhöhe, die im Diagramm 60 als angestrebtes mittleres vertikales Höhenniveau 62 von 90 mm bezeichnet ist, wird über das Luftfederungselement 20 noch nicht vollständig erreicht. Jedoch übernimmt die elektromagnetisch wirkende Dämpfungs- und Höhennivelliereinheit 30 diese Wegdifferenz zum angestrebten mittleren vertikalen Höhenniveau 62 von 90 mm. Die Federung wird also mithilfe der durch die elektromagnetisch wirkende Dämpfungs- und Höhennivelliereinheit 30 erzeugten Kraft auf diese Zielhöhe gebracht. Bei temporären Niveauabweichungen, welche sich beispielsweise durch Gewichtsverlagerungen des Fahrers bei Bergauf-, Bergab- oder Schrägfahrten ergeben können, kann je nach Abweichungsrichtung und Abweichungsintensität die durch die elektromagnetisch wirkende Dämpfungs- und Höhennivelliereinheit 30 erzeugten Kräfte erhöht oder abgesenkt werden. Bei der vorliegenden elektromagnetisch wirkenden Dämpfungs- und Höhennivelliereinheit 30 werden die hierdurch erzeugten Drehmomente bzw. Stützkräfte ausgenutzt, um äußere in das Federungssystem eingebrachte Einleitungen zu beeinflussen. Die elektromagnetisch wirkende Dämpfungs- und Höhennivelliereinheit 30 kann sowohl mit der Einleitung wirken, dass heißt, eine Stützkraft zum Tragen der Masse wird reduziert. Sie kann aber auch gegen die Einleitung wirken, wobei die Stützkraft entsprechend erhöht wird.

Eine hochfrequente Regelung der elektromagnetisch wirkenden Dämpfungs- und Höhennivelliereinheit 30, welche zur Schwingungsbeeinflussung erforderlich ist, erfolgt in dem Ausführungsbeispiel mit dem Permanentmagneten (siehe Figuren 5 und 6) über eine Änderung des Spalts 51 zwischen dem Rotor 32 und dem Stator 35, das heißt, der axiale Abstand zwischen dem Rotor 32 und dem Stator 35 wird vergrößert oder verkleinert. Hierbei erzeugt ein kleinerer Spalt 51 eine höhere in Fahrzeughöhenrichtung 21 wirkende Stützkraft als ein größerer Spalt 51.

Im Ausführungsbeispiel mit dem Elektromagneten 40 (siehe Figuren 3 und 4) hingegen bleibt der Spalt 51 konstant, wobei die Regelung mittels einer Stromstärke- und/oder Spannungsänderung einhergeht.

Die Art und Intensität der Regelung ist bei allen Ausführungsbeispielen in einem Regelalgorithmus einer entsprechend ausgestalteten Regel- und/oder Steuerungseinrichtung (hier nicht explizit gezeigt) zugrunde gelegt.

Mittels der Steuer- und/oder Regeleinrichtung kann die elektromagnetisch wirkenden Dämpfungs- und Höhennivelliereinheit 30 in Abhängigkeit von einer auf das obere Abschlussteil 3 wirkenden Auflast entsprechend eingestellt werden.

Hierzu weist die Steuer- und/oder Regeleinrichtung einerseits einen auf Seite des unteren Abschlussteils 4 angeordneten Beschleunigungsmesssensors (nicht gezeigt) zum Ermitteln von auf das untere Abschlussteil 4 wirkende Beschleunigungen und andererseits einen Wegmesssensor (nicht gezeigt) zum Erfassen des aktuellen Abstands 31 und/oder einer entsprechenden Abstandsabweichung zwischen dem oberen und der unteren Abschlussteil 3, 4 auf.

Die elektromagnetisch wirkende Dämpfungs- und Höhennivelliereinheit 30 ist in den hier beschrieben Ausführungsbeispielen konstruktiv einfach durch eine entsprechend ausgestaltete Wirbelstrombremse 80 ausgeführt und sie arbeitet demnach nach dem Prinzip einer Wirbelstrom-Aktiv-Steuerung.

Es versteht sich, dass es sich bei den vorstehend erläuterten Ausführungsbeispielen lediglich um erste Ausgestaltungen der elektromagnetisch wirkende Dämpfungs- und Höhennivelliereinheit 30 handelt. Insofern beschränkt sich die Ausgestaltung der Erfindung nicht auf diese Ausführungsbeispiele.

An dieser Stelle sei somit nochmals explizit darauf hingewiesen, dass der vorstehend beschriebene Fahrzeugsitzunterbau 1 alternativ auch als Fahrzeugkabinenunterbau verwendet werden kann, sofern er entsprechend dimensioniert ist.

### Bezugszeichenliste

- 1: Fahrzeugsitzunterbau
- 2: Federungseinrichtung
- 3: oberes Abschlussteil
- 4: unteres Abschlussteil
- 5: Scherengestell
- 6: erstes Scherenarmpaar
- 7: zweites Scherenarmpaar
- 8: erster Scherenarm vom ersten Scherenarmpaar
- 9: erster Scherenarm vom zweiten Scherenarmpaar
- 10: zweiter Scherenarm vom ersten Scherenarmpaar
- 11: zweiter Scherenarm vom zweiten Scherenarmpaar
- 12: gemeinsame untere Festlagereinrichtung
- 13: gemeinsame obere Loslagereinrichtung
- 14: gemeinsame obere Festlagereinrichtung
- 15: gemeinsame untere Loslagereinrichtung
- 16: erstes Drehgelenk
- 17: zweites Drehgelenk
- 18: Drehachse
- 19: Federungselement
- 20: Luftfederelement
- 21: Fahrzeughöhenrichtung
- 25: Dämpfungseinrichtung
- 26: hydraulisches Stoßdämpferelement
- 27: Zylinderteil
- 28: Querstange
- 29: Kolbenteil
- 30: Dämpfungs- und Höhennivelliereinheit
- 31: Abstand
- 32: Rotor
- 33: Drehachsenelement
- 34: elektrisch regelbarer Elektromotor
- 34A: Gehäuse
- 35: Stator
- 36: Kupferring
- 37: Kragenbereich
- 40: Elektromagneten
- 41: elektrischer Anschluss
- 50: Permanentmagneten
- 51: Spalt
- 60: Diagramm
- 61: Abszisse
- 62: Höhenniveau
- 63: Ordinate
- 64: untere Federkennlinie
- 65: Kraftkennlinie
- 66: Schnittpunkt
- 67: erzeugte Linie
- 68: weitere erzeugte Linie
- 69: obere Kraftkennlinie
- 80: Wirbelstrombremse

## Patentansprüche

1. Fahrzeugsitz oder Fahrzeugkabine mit einer Federungseinrichtung (2) umfassend ein oberes Abschlussteil (3) und ein gegenüber dem oberen Abschlussteil (3) auslenkbares unteres Abschlussteil (4), welche mittels eines Federungselements (19, 20) federnd miteinander wirkverbunden sind, und mit einer Dämpfungseinrichtung (25) zum Dämpfen von auf wenigstens einem der beiden Abschlussteile (3, 4) wirkenden Schwingungen,
**gekennzeichnet durch**
eine elektromagnetisch wirkende Dämpfungs- und Höhennivelliereinheit (30), welche derart zwischen den beiden Abschlussteilen (3, 4) angeordnet ist, dass sie auf das obere der beiden Abschlussteile (3, 4) in Fahrzeughöhenrichtung (21) sowohl schwingungsisolierend als auch höhennivellierend wirkt, wobei mittels der Dämpfungs- und Höhennivelliereinheit (30) ein in Fahrzeughöhenrichtung wirkendes Drehmoment erzeugbar ist, wobei eine Antriebseinheit (34) eines Rotors (32) der elektromagnetisch wirkenden Dämpfungs- und Höhennivelliereinheit (30) an einem ersten Scherenarmteil (8) eines die beiden Abschlussteile (3, 4) miteinander koppelnden Scherengestells (5) und ein Stator (35) der elektromagnetisch wirkenden Dämpfungs- und Höhennivelliereinheit (30) an einem zweiten Scherenarmteil (10) des Scherengestells (5) angeordnet sind, wobei der Stator (35) ein elektrisch regelbares Elektromagnetelement (40) umfasst, so dass die erzielbare elektromagnetische Wirkung der Dämpfungs- und Höhennivelliereinheit (30) durch eine Drehzahl des Rotors (32) und durch die Stromstärke oder Spannung an dem Elektromagnetelement (40) modulierbar ist.

2. Fahrzeugsitz oder Fahrzeugkabine nach Anspruch 1,
**dadurch gekennzeichnet, dass**
die Dämpfungseinrichtung (25) und eine Höhennivellierungseinrichtung zum Einstellen eines Abstandes (31) zwischen dem oberen Abschlussteil (3) und dem unteren Abschlussteil (4) in Fahrzeughöhenrichtung (21) gemeinsam die elektromagnetisch wirkende Dämpfungs- und Höhennivelliereinheit (30) aufweisen, mittels welcher ein in Fahrzeughöhenrichtung (21) wirkendes Drehmoment erzeugbar ist.

3. Fahrzeugsitz oder Fahrzeugkabine nach Anspruch 1 oder 2,
**dadurch gekennzeichnet, dass**
ein Rotor (32) der elektromagnetisch wirkenden Dämpfungs- und Höhennivelliereinheit (30) ein Drehachsenelement (33) zweier drehbeweglich miteinander verbundener Scherenarmteile (8, 10) eines die beiden Abschlussteile (3, 4) miteinander koppelnden Scherengestells (5) umfasst.

4. Fahrzeugsitz oder Fahrzeugkabine nach einem der Ansprüche 1 bis 3,
**dadurch gekennzeichnet, dass**
der Rotor (32) gegenüber einem Stator (35) axial entlang der Drehachse (18) des Drehachsenelements (33) verlagerbar gehaltert ist.

5. Fahrzeugsitz oder Fahrzeugkabine nach einem der Ansprüche 1 bis 4,
**gekennzeichnet durch**
eine Steuer- und/oder Regeleinrichtung zum Einstellen der elektromagnetisch wirkenden Dämpfungs- und Höhennivelliereinheit (30) in Abhängigkeit von einer auf das obere Abschlussteil (3) wirkenden Auflast.

6. Fahrzeugsitz oder Fahrzeugkabine nach Anspruch 5,
**dadurch gekennzeichnet, dass**
die Steuer- und/oder Regeleinrichtung einen auf Seite des unteren Abschlussteils (4) angeordneten Beschleunigungsmesssensor zum Ermitteln von auf das untere Abschlussteil (4) wirkende Beschleunigungen umfasst.

7. Fahrzeugsitz oder Fahrzeugkabine nach Anspruch 5 oder 6,
**dadurch gekennzeichnet, dass**
die Steuer- und/oder Regeleinrichtung einen Wegmesssensor zum Erfassen eines Abstands (31) und/oder einer Abstandsabweichung zwischen dem oberen und der unteren Abschlussteil (3, 4) umfasst.

8. Fahrzeugsitz oder Fahrzeugkabine nach einem der Ansprüche 1 bis 7,
**dadurch gekennzeichnet, dass**
die elektromagnetisch wirkende Dämpfungs- und Höhennivelliereinheit (30) eine Wirbelstrombremse (80) aufweist.

9. Fahrzeugsitz oder Fahrzeugkabine nach einem der Ansprüche 1 bis 8,
**dadurch gekennzeichnet, dass**
das obere Abschlussteil (3) und das untere Abschlussteil (4) mittels eines Scherengestells (5) miteinander verbunden sind.

10. Fahrzeugsitz oder Fahrzeugkabine mit einer Federungseinrichtung (2) umfassend ein oberes Abschlussteil (3) und ein gegenüber dem oberen Abschlussteil (3) auslenkbares unteres Abschlussteil (4), welche mittels eines Federungselements (19, 20) federnd miteinander wirkverbunden sind, und mit einer Dämpfungseinrichtung (25) zum Dämpfen von auf wenigstens einem der beiden Abschlussteile (3, 4) wirkenden Schwingungen,
**gekennzeichnet durch**
eine elektromagnetisch wirkende Dämpfungs- und Höhennivelliereinheit (30), welche derart zwischen den beiden Abschlussteilen (3, 4) angeordnet ist, dass sie auf das obere der beiden Abschlussteile (3, 4) in Fahrzeughöhenrichtung (21) sowohl schwingungsisolierend als auch höhennivellierend wirkt, wobei mittels der Dämpfungs- und Höhennivelliereinheit (30) ein in Fahrzeughöhenrichtung wirkendes Drehmoment erzeugbar ist, wobei eine Antriebseinheit (34) eines Rotors (32) der elektromagnetisch wirkenden Dämpfungs- und Höhennivelliereinheit (30) an einem ersten Scherenarmteil (8) eines die beiden Abschlussteile (3, 4) miteinander koppelnden Scherengestells (5) und ein Stator (35) der elektromagnetisch wirkenden Dämpfungs- und Höhennivelliereinheit (30) an einem zweiten Scherenarmteil (10) des Scherengestells (5) angeordnet sind und der Stator (35) ein Permanentmagnetelement (50) umfasst, wobei die elektromagnetische Wirkung der Dämpfungs- und Höhennivelliereinheit (30) durch eine Drehzahl des Rotors (32) und durch eine axiale Relativbewegung zwischen dem Rotor (32) und dem Stator (35) beeinflussbar ist, wodurch ein Spalt (51) zwischen dem Rotor (32) und dem Stator (35) veränderbar ist.

11. Nutzkraftfahrzeug mit einem Fahrzeugsitz und mit einer Fahrzeugkabine,
**gekennzeichnet durch**
einen Fahrzeugsitz und/oder eine Fahrzeugkabine nach einem der vorhergehenden Ansprüche.

## Claims

1. Vehicle seat or vehicle cab comprising a suspension system (2) having an upper cover part (3) and a lower cover part (4) that is deflectable relative to the upper cover part (3), which parts are resiliently operatively interconnected by means of a suspension element (19, 20), and comprising a damping system (25) for damping vibrations acting on at least one of the two cover parts (3, 4),
**characterised by**
an electromagnetically acting damping and height-adjusting unit (30), which is arranged between the two cover parts (3, 4) such that said unit acts on the upper of the two cover parts (3, 4) in the vertical direction (21) of the vehicle in both a vibration-isolating and height-adjusting manner, it being possible for a torque that acts in the vertical direction of the vehicle to be generated by means of the damping and height-adjusting unit (30), a drive unit (34) of a rotor (32) of the electromagnetically acting damping and height-adjusting unit (30) being arranged on a first scissor-arm part (8) of a scissor-action frame (5) that couples the two cover parts (3, 4) to one another, and a stator (35) of the electromagnetically acting damping and height-adjusting unit (30) being arranged on a second scissor-arm part (10) of the scissor-action frame (5), the stator (35) comprising an electrically controllable electromagnet element (40), such that the achievable electromagnetic action of the damping and height-adjusting unit (30) can be modulated by a speed of the rotor (32) and by the current or voltage at the electromagnet element (40).

2. Vehicle seat or vehicle cab according to claim 1,
**characterised in that**
the damping system (25) and a height-adjusting system for adjusting a distance (31) between the upper cover part (3) and the lower cover part (4) in the vertical direction (21) of the vehicle together comprise the electromagnetically acting damping and height-adjusting unit (30), by means of which a torque acting in the vertical direction (21) of the vehicle can be generated.

3. Vehicle seat or vehicle cab according to either claim 1 or claim 2,
**characterised in that**
a rotor (32) of the electromagnetically acting damping and height-adjusting unit (30) comprises a rotary shaft element (33) of two rotationally interconnected scissor-arm parts (8, 10) of a scissor-action frame (5) that couples the two cover parts (3, 4) to one another.

4. Vehicle seat or vehicle cab according to any of claims 1 to 3,
**characterised in that**
the rotor (32) is mounted, relative to a stator (35), so as to be movable axially along the rotational axis (18) of the rotary shaft element (33).

5. Vehicle seat or vehicle cab according to any of claims 1 to 4,
**characterised by**
an open-loop and/or closed-loop control system for adjusting the electromagnetically acting damping and height-adjusting unit (30) depending on a load acting on the upper cover part (3).

6. Vehicle seat or vehicle cab according to claim 5,
**characterised in that**
the open-loop and/or closed-loop control system comprises an acceleration-measuring sensor which is arranged on the face of the lower cover part (4) and is intended for determining accelerations acting on the lower cover part (4).

7. Vehicle seat or vehicle cab according to either claim 5 or claim 6,
**characterised in that**
the open-loop and/or closed-loop control system comprises a position-measuring sensor for detecting a distance (31) and/or a distance variation between the upper and the lower cover part (3, 4).

8. Vehicle seat or vehicle cab according to any of claims 1 to 7,
**characterised in that**
the electromagnetically acting damping and height-adjusting unit (30) comprises an eddy-current brake (80).

9. Vehicle seat or vehicle cab according to any of claims 1 to 8,
**characterised in that**
the upper cover part (3) and the lower cover part (4) are interconnected by means of a scissor-action frame (5).

10. Vehicle seat or vehicle cab comprising a suspension system (2) having an upper cover part (3) and a lower cover part (4) that is deflectable relative to the upper cover part (3), which parts are resiliently operatively interconnected by means of a suspension element (19, 20), and comprising a damping system (25) for damping vibrations acting on at least one of the two cover parts (3, 4),
**characterised by**
an electromagnetically acting damping and height-adjusting unit (30), which is arranged between the two cover parts (3, 4) such that said unit acts on the upper of the two cover parts (3, 4) in the vertical direction (21) of the vehicle in both a vibration-isolating and height-adjusting manner, it being possible for a torque that acts in the vertical direction of the vehicle to be generated by means of the damping and height-adjusting unit (30), a drive unit (34) of a rotor (32) of the electromagnetically acting damping and height-adjusting unit (30) being arranged on a first scissor-arm part (8) of a scissor-action frame (5) that couples the two cover parts (3, 4) to one another, and a stator (35) of the electromagnetically acting damping and height-adjusting unit (30) being arranged on a second scissor-arm part (10) of the scissor-action frame (5), and the stator (35) comprising a permanent magnet element (50), it being possible for the electromagnetic action of the damping and height-adjusting unit (30) to be modulated by a speed of the rotor (32) and by a relative axial movement between the rotor (32) and the stator (35), as a result of which a gap (51) between the rotor (32) and the stator (35) can be modified.

11. Utility vehicle comprising a vehicle seat and a vehicle cab,
**characterised by**
a vehicle seat and/or a vehicle cab according to any of the preceding claims.

## Revendications

1. Siège de véhicule ou cabine de véhicule ayant un dispositif de suspension (2) comportant une partie de fermeture supérieure (3) et une partie de fermeture inférieure (4) apte à être déviée par rapport à la partie d'extrémité supérieure (3), lesquelles sont reliées fonctionnellement l'une à l'autre de manière élastique au moyen d'un élément de suspension (19, 20), et ayant un dispositif d'amortissement (25) pour l'amortissement de vibrations agissant sur au moins l'une des deux parties de fermeture (3, 4),
caractérisé(e) par
une unité (30) d'amortissement et de nivellement de hauteur agissant de manière électromagnétique, laquelle est disposée entre les deux parties de fermeture (3, 4) de telle sorte qu'elle agit non seulement de façon antivibratoire mais encore par nivellement de hauteur sur la partie supérieure des deux parties de fermeture (3, 4) dans la direction (21) de la hauteur de véhicule, où, au moyen de l'unité (30) d'amortissement et de nivellement de hauteur, un couple de rotation agissant dans la direction de la hauteur de véhicule est apte à être produit, où une unité d'entraînement (34) d'un rotor (32) de l'unité (30) d'amortissement et de nivellement de hauteur agissant de manière électromagnétique est disposée sur une première partie bras de ciseaux (8) d'un châssis à ciseaux (5) couplant l'une à l'autre les deux parties de fermeture (3, 4) et un stator (35) de l'unité (30) d'amortissement et de nivellement de hauteur agissant de manière électromagnétique est disposé sur une seconde partie bras de ciseaux (10) du châssis à ciseaux (5), où le stator (35) comporte un élément électroaimant (40) réglable électriquement, de telle sorte que l'action électromagnétique pouvant être obtenue de l'unité (30) d'amortissement et de nivellement de hauteur est modulable par une vitesse de rotation du rotor (32) et par le courant ou la tension sur l'élément électro-aimant (40).

2. Siège de véhicule ou cabine de véhicule selon la revendication 1,
caractérisé(e) par le fait que
le dispositif d'amortissement (25) et un dispositif de nivellement de hauteur pour le réglage d'une distance (31) entre la partie de fermeture supérieure (3) et la partie de fermeture inférieure (4) dans la direction (21) de la hauteur du véhicule présentent conjointement l'unité (30) d'amortissement et de nivellement de hauteur agissant de façon électromagnétique, au moyen de laquelle un couple de rotation agissant dans la direction (21) de la hauteur de véhicule peut être produit.

3. Siège de véhicule ou cabine de véhicule selon l'une des revendications 1 ou 2,
caractérisé(e) par le fait que
un rotor (32) de l'unité (30) d'amortissement et de nivellement de hauteur agissant de façon électromagnétique comporte un élément axe de rotation (33) des deux parties bras de ciseaux (8, 10) reliées l'une à l'autre de façon mobile en rotation d'un châssis à ciseaux couplant l'une à l'autre les deux parties de fermeture (3, 4).

4. Siège de véhicule ou cabine de véhicule selon l'une des revendications 1 à 3,
caractérisé(e) par le fait que
le rotor (32) est maintenu déplaçable à l'encontre d'un stator (35) axialement le long de l'axe de rotation (18) de l'élément axe de rotation (33).

5. Siège de véhicule ou cabine de véhicule selon l'une des revendications 1 à 4,
caractérisé(e) par
un dispositif de commande et/ou de réglage pour le réglage de l'unité (30) d'amortissement et de nivellement de hauteur agissant de façon électromagnétique en fonction d'une charge agissant sur la partie de fermeture supérieure (3).

6. Siège de véhicule ou cabine de véhicule selon la revendication 5,
caractérisé(e) par le fait que
le dispositif de commande et/ou de réglage comporte un capteur de mesure d'accélération disposé du côté de la partie de fermeture inférieure (4) pour la détermination d'accélérations agissant sur la partie de fermeture inférieure (4).

7. Siège de véhicule ou cabine de véhicule selon l'une des revendications 5 ou 6,
caractérisé(e) par le fait que
le dispositif de commande et/ou de réglage comporte un capteur de mesure de déplacement pour la détection d'une distance (31) et/ou d'un écart de distance entre la partie de fermeture supérieure et la partie de fermeture inférieure (3, 4).

8. Siège de véhicule ou cabine de véhicule selon l'une des revendications 1 à 7,
caractérisé(e) par le fait que
l'unité (30) d'amortissement et de nivellement de hauteur agissant de façon électromagnétique présente un frein à courants de Foucault (80).

9. Siège de véhicule ou cabine de véhicule selon l'une des revendications 1 à 8,
caractérisé(e) par le fait que
la partie de fermeture supérieure (3) et la partie de fermeture inférieure (4) sont reliées l'une à l'autre au moyen d'un châssis à ciseaux (5).

10. Siège de véhicule ou cabine de véhicule ayant un dispositif de suspension (2) comportant une partie de fermeture supérieure (3) et une partie de fermeture inférieure (4) apte à être déviée par rapport à la partie de fermeture supérieure (3), lesquelles sont reliées fonctionnellement l'une à l'autre de manière élastique au moyen d'un élément de suspension (19, 20), et ayant un dispositif d'amortissement (25) pour l'amortissement d'oscillations agissant sur au moins l'une des deux parties de fermeture (3, 4),
caractérisé(e) par
une unité (30) d'amortissement et de nivellement de hauteur agissant de façon électromagnétique, laquelle est disposée entre les deux parties de fermeture (3, 4) de telle sorte qu'elle agit non seulement de façon antivibratoire mais encore par nivellement de hauteur sur la partie supérieure des deux parties de fermeture (3, 4) dans la direction (21) de la hauteur de véhicule, où, au moyen de l'unité (30) d'amortissement et de nivellement de hauteur, un couple de rotation agissant dans la direction de la hauteur de véhicule peut être produit, où une unité d'entraînement (34) d'un rotor (32) de l'unité (30) d'amortissement et de nivellement de hauteur agissant de façon électromagnétique est disposée sur une première partie bras de ciseaux (8) d'un châssis à ciseaux (5) couplant l'une à l'autre les deux parties de fermeture (3, 4) et un stator (35) de l'unité (30) d'amortissement et de nivellement de hauteur agissant de façon électromagnétique est disposé sur une seconde partie bras de ciseaux (10) du châssis à ciseaux (5) et le stator (35) comporte un élément aimant permanent (50), où l'action électromagnétique de l'unité (30) d'amortissement et de nivellement de hauteur peut être influencée par une vitesse de rotation du rotor (32) et par un déplacement relatif axial entre le rotor (32) et le stator (35), ce par quoi un intervalle (51) entre le rotor (32) et le stator (35) est modifiable.

11. Véhicule utilitaire comportant un siège de véhicule et comportant une cabine de véhicule,
**caractérisé par**
un siège de véhicule et/ou une cabine de véhicule selon l'une des revendications précédentes.
